# EUROPEAN PATENT APPLICATION

(11) **EP 2 865 521 A1**
(43) Date of publication of application: **29.04.2015**
(21) Application number: 13806744.2
(22) Date of filing: 18.06.2013
(51) Int. Cl.: B32B 27/16, B32B 37/00

(54) **METHOD FOR PRODUCING LAMINATE, LAMINATE, AND ARTICLE**

(30) Priority: 20.06.2012 JP 2012138557
(71) Applicant: Mitsubishi Rayon Co., Ltd., Tokyo 100-8253 (JP)
(72) Inventor: TAKIHARA Tsuyoshi, Otake-shi Hiroshima 739-0693 (JP); OKAMOTO Eiko, Otake-shi Hiroshima 739-0693 (JP)
(74) Representative: TBK
(86) International application number: PCT/JP2013/066710
(87) International publication number: WO 2013/191169

(57) **Abstract**

Described is a method for producing a laminate having a micro concave-convex structural body and a film, wherein the body has, at its surface, a micro concave-convex structure having a period less than a wavelength of visible light, the water contact angle of the surface is 120° or greater, and the film contains a film substrate and a film resin layer to protect the surface. A curable resin composition is disposed as the film resin layer between a side surface of the micro concave-convex structure and the film substrate. The micro concave-convex structural body and the film substrate are bonded via the curable resin composition. The curable resin composition is cured to obtain a cured product thereof. The compressive elastic modulus of the cured product is 30 MPa or greater, and is less than that of a cured product of the material constituting the micro concave-convex structure.

## Description

### Field of the Invention

The invention relates to a method for producing a laminate, a laminate, and an article.

This application claims the priority benefit of Japan Patent Application no. 2012-138557 filed on June 20, 2012, and incorporates the entirety of the same herein.

### Description of Related Art

It is known that a micro concave-convex structural body having a regular micro concave-convex structure on the surface exhibits anti-reflection properties due to continuous change of refractive index. To make the micro concave-convex structural body exhibit good anti-reflection properties, the spacing between adjacent convex portions or concave portions, namely its period, has to be less than the wavelength of visible light. Such micro concave-convex structural body can also exhibit super water repellency due to the Lotus effect.

Methods for forming the micro concave-convex structure include, e.g., the followings:
- a method in which injection molding or extrusion molding is performed using a mold on which a micro concave-convex structure is formed at its surface (method 1);
- a method in which an active energy ray curable resin composition ("resin composition," hereinafter) is disposed between a mold and a transparent substrate, the resin composition is cured by irradiation of an active energy ray to transfer the micro concave-convex structure of the mold onto the cured product, and the mold is peeled from the cured product (method 2); and
- a method in which after the micro concave-convex structure of a mold is transferred onto a resin composition, the mold is peeled from the resin composition, and the resin composition is cured by irradiation of an active energy ray (method 3).

Among the methods, in terms of transferability of the micro concave-convex structure and degree of freedom of surface composition, a method in which the resin composition is cured by irradiation of an active energy ray to transfer the micro concave-convex structure of a mold is preferred (methods 2 and 3). The method is particularly suitable when a belt- or roll-shaped mold allowing continuous production is used, and has good productivity.

However, the issues below are present in the micro concave-convex structural body.
- In comparison to a molded article having a smooth surface produced by using the same resin composition, the scratch resistance is poor.
- In a case that a film-like micro concave-convex structural body on which a micro concave-convex structure of a mold is transferred is continuously produced and wound into a roll, if the hardness of the cured product is insufficient, the shape (particularly the shape of the convex portion) of the micro concave-convex structure may be changed due to tight winding.
- The shape of the micro concave-convex structure, especially the shape of the convex portion, may be changed due to the load applied when a thin-film micro concave-convex structural body on which a micro concave-convex structure of a mold is transferred is bonded to various displays and so on.

Therefore, in order to maintain (or protect) the shape of the micro concave-convex structure, a protective film is adhered to the surface of the micro concave-convex structure side before the micro concave-convex structural body is used.

However, in cases that the period of the micro concave-convex structure is several nm to several hundred nm, in comparison to the general micro concave-convex structure, the spacing between the convex portions is smaller, and therefore the contact area between the micro concave-convex structure and the protective film is small.

Moreover, the adhesive component of the adhesive layer of the protective film is not readily entered into the concave portion of the micro concave-convex structure. Hence, the protective film may be not sufficiently adhered to the micro concave-convex structural body, and may peel off during storage or transport.

In particular, when a fluorine compound or a silicone compound, etc. is used to form the micro concave-convex structural body to make the same exhibit high water repellency, not only water is expelled, but also a protective film is not readily adhered hereto.

The protective films used for optical films having a micro concave-convex structure at its surface and good adhesion include the followings:
1) a protective film having an embedding degree of 45% or less relative to the thickness of a prism sheet adhesive layer after extrusion is performed under a specific condition after the adhesive layer is adhered to the prism sheet (patent literature 1); and
2) a protective film having an adhesive layer having a surface roughness of 0.030 µm or less (Patent Literature 2).

On the other hand, if a protective film (strongly adhesive protective film) containing an adhesive layer containing an adhesive having stronger-than-average adhesion or the like material for the adhesion power of the protective film, the problem of surface contamination of the micro concave-convex structural body caused by the adhesive may be present. The cause may be that the adhesive component of the adhesive layer permeates into the depth of the concave portion of the micro concave-convex structure as time passes, or that the adhesive component remains on the surface of the micro concave-convex structural body (called "adhesive residue", hereinafter) after the protective film is peeled off,. Surface contamination of the micro concave-convex structural body may cause reduction in anti-reflection properties. Specifically, the wavelength dependence of the reflectance may change, and the overall reflectance may increase. Moreover, when the micro concave-convex structural body has water repellency, the water repellency may be reduced due to surface contamination caused by the adhesive residue. Specifically, the water contact angle of the surface of the micro concave-convex structural body may be reduced.

Hence, protective films being readily adhered to the micro concave-convex structural body and having an adhesive component not readily permeating into the depth of the concave portion of the micro concave-convex structure include the following:
3) a protective film formed by laminating an adhesive layer on a surface of a film substrate in a matter such that the protective film is adhered to the portions of the micro concave-convex structural body outside of the micro concave-convex structure (Patent Literature 3).

However, the protective films of 1) to 3) do not necessarily fully satisfy the adhesion power and the inhibition of adhesive residue.

### Prior-art Literatures

### Patent Literatures

Patent Literature 1: Japanese Patent Laid-Open Publication No. 2011-13496
Patent Literature 2: Japanese Patent Laid-Open Publication No. 2011-88356
Patent Literature 3: Japanese Patent Laid-Open Publication No. 2010-120348

### SUMMARY OF THE INVENTION

### Problems to be Solved by the Invention

In view of the forgoing, an object of the invention is to provide: a method for producing a laminate in which a micro concave-convex structural body having water repellency and a protective film are adhered well such that peeling does not easily occur, and adhesive residue is not easily left on the micro concave-convex structure after the protective film is peeled off; a laminate containing a micro concave-convex structural body of which the surface is protected; and an article obtained after the protective film or the micro concave-convex structural body is peeled from the laminate.

### Means for Solving the Problems

The inventors have performed intensive studies and researched a method in which a protective film is adhered to a surface having water repellency and low surface free energy. It is believed that for the surface on which chemical interaction is not readily obtained and the contact area is small due to the micro concave-convex structure, the protective film is effective in satisfying the micro concave-convex structure.

Moreover, it is discovered that when the protective film is not adhered to the micro concave-convex structural body and a specific curable resin composition is disposed between the surface of the micro concave-convex structural body and a protective film substrate and cured to integrate the protective film substrate and the cured product of the curable resin composition and thereby produce the protective film, the surface of the micro concave-convex structural body can be protected. It is also discovered that with the method, the micro concave-convex structural body having water repellency and the protective film can be adhered well, and peeling does not easily occur. Moreover, if required, the protective film can be readily peeled off without leaving an adhesive residue, thus completing the invention.

Accordingly, the invention has the following characteristics.

Item <1> is a method for producing a laminate including a micro concave-convex structural body and a film, wherein the micro concave-convex structural body has a micro concave-convex structure of which the period is less than the wavelength of visible light on a surface, the water contact angle of the surface is 120° or greater, and the film contains a film substrate and a film resin layer and protects the surface of the micro concave-convex structural body. The method includes:
a step of disposing a curable resin composition as the film resin layer between a side surface of the micro concave-convex structure of the micro concave-convex structural body and the thin-film substrate;
a step of bonding the micro concave-convex structural body and the thin-film substrate via the curable resin composition;
a step of curing the curable resin composition to obtain a cured product of the curable resin composition, wherein the compressive elastic modulus of the cured product is 30 MPa or greater and is less than the compressive elastic modulus of the cured product of the material constituting the micro concave-convex structure.

Item <2> is the method of <1> in which the curable resin composition is cured by irradiation of an active energy ray.

Item <3> is the method of <1> or <2> in which the viscosity of the curable resin composition under 25°C is 10 mPa-s to 10000 mPa·s.

Item <4> is the method of any one of <1> or <3> in which the micro concave-convex structural body and the thin-film substrate are adhered under a pressure of 0.01 MPa to 1 MPa.

Item <5> is the method of any one of <1> or <4> in which the cohesion force of the cured product of the curable resin composition is greater than the adhesion force between the cured product of the curable resin composition and the micro concave-convex structural body, and the adhesion force between the cured product of the curable resin composition and the thin-film substrate is greater than the adhesion force between the cured product of the curable resin composition and the micro concave-convex structural body.

Item <6> is a laminate that includes a micro concave-convex structural body and a film, in which the concave-convex structural body has, at its surface, a micro concave-convex structure having a period less than the wavelength of visible light, the water contact angle of the surface is 120° or greater, the film contains a film substrate and a film resin layer, and protects the surface of the micro concave-convex structure, the film is laminated on the micro concave-convex structural body in a manner such that the micro concave-convex structure of the concave-convex structural body and the film resin layer are connected, the film resin layer is obtained by curing a curable resin composition, and the compressive elastic modulus of a cured product of the curable resin composition is 30 MPa or greater and is less than the compressive elastic modulus of a cured product of a material constituting the micro concave-convex structure.

Item <7> is the laminate of <6> in which the compressive elastic modulus of the cured product of the curable resin composition is 20 MPa to 250 MPa less than the compressive elastic modulus of the cured product of the material constituting the micro concave-convex structure.

Item <8> is the laminate of <6> or <7> in which when the total amount of all polymerizable components contained in the curable resin composition is set to 100 mass%, the curable resin composition contains 5 mass% to 50 mass% of polymerizable components having a molecular weight of 230 or less.

Item <9> is the laminate of any one of <6> to <8> in which the thickness of the film substrate is 12 µm to 2 mm.

Item <10> is the laminate of any one of <6> to <9> in which the flexural elastic modulus of the film substrate is 500 MPa to 4000 MPa.

Item <11> is the laminate of any one of <6> to <10> in which the film substrate contains one or more resins selected from the group consisting of a polyolefin resin, a polycarbonate resin, a polyester resin, and an acrylic resin.

Item <12> is the laminate of any one of <6> to <11> in which the micro concave-convex structure includes a material containing one or more compounds selected from the group consisting of a fluorine-based compound, a silicone-based compound, a compound having an alicyclic structure, and a compound having a long-chain alkyl group.

Item <13> is an article formed by peeling the film from the laminate of any one of <6> to <12>.

Item <14> is an article that is formed by peeling the micro concave-convex structural body from the laminate of any one of <6> to <12> and contains the film substrate and the film resin.

### Effects of the invention

The invention can provide: a producing method of a laminate in which a micro concave-convex structural body having water repellency and a protective film are adhered well such that peeling does not readily occur, and after the protective film is peeled off, adhesive residue is not readily generated on the micro concave-convex structure; a laminate containing a micro concave-convex structural body for which the surface is protected; and an article after the protective film or the micro concave-convex structural body is peeled from the laminate.

### BRIEF DESCRIPTION OF THE DRAWINGS

FIG. 1 is a cross-sectional view of an example of a laminate of the invention.
FIG. 2 is a cross-sectional view of an example of a micro concave-convex structural body of the invention.
FIG. 3 is a cross-sectional view of another example of a micro concave-convex structural body of the invention.
FIG. 4 is a cross-sectional view of production steps of a mold having anodized aluminum oxide on the surface.

### DESCRIPTION OF THE EMBODIMENTS

In the following, the invention is described in detail with reference to figures.

Moreover, "(meth)acrylate" in this specification is a general term for acrylate and methacrylate, and "(meth)acryloyl" is a general term for acryloyl and methacryloyl.

Moreover, "active energy ray" in this specification represents, for instance, visible light, ultraviolet light, electron beam, plasma, or heat ray (such as infrared light).

Moreover, "wavelength of visible light" in this specification represents a wavelength of 380 nm to 780 nm.

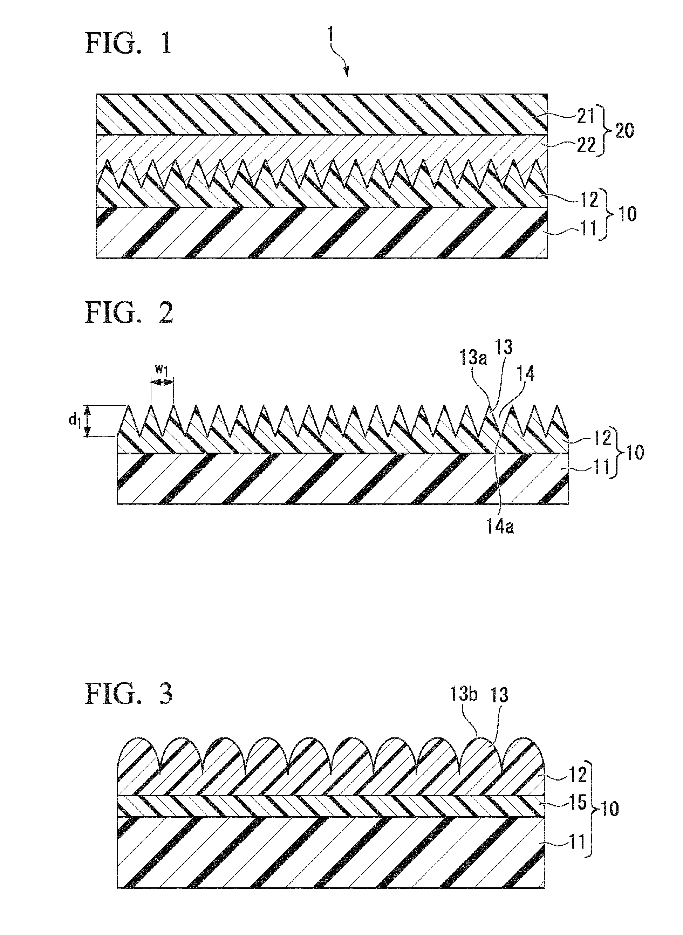

In FIGs. 1 to 4, each layer is set to a recognizable size in the figure, and therefore the scale of each layer is different.

Moreover, in FIGs. 2-3, the same reference numerals are assigned to the same constituting devices in FIG. 1, and are therefore not described again.

### [Laminate]

FIG. 1 is a cross-sectional view of an example of a laminate of the invention.

The laminate 1 of the example is a micro concave-convex structural body to which a protective film is attached. Specifically, the laminate 1 is formed by bonding a film (also called "protective film" hereinafter) 20 to a side surface of a micro concave-convex structure having a period less than the wavelength of visible light on the surface of a micro concave-convex structural body 10 in a manner such that the micro concave-convex structure of the micro concave-convex structural body 10 and the protective film resin layer 22 are connected. The film 20 contains a film substrate (also referred to as "protective film substrate" hereinafter) 21 and a film resin layer (also referred to as "protective film resin layer" hereinafter) 22.

Moreover, in the invention, the side surface of the micro concave-convex structure of the micro concave-convex structural body 10, i.e., the surface protected by the protective film 20, is referred to as "surface of micro concave-convex structural body".

The protective film resin layer 22 constituting the protective film 20 is formed by curing a curable resin composition disposed between the surface of the micro concave-convex structural body 10 and the protective film substrate 21 disposed on the surface by irradiation of an active energy ray.

The laminate 1 can be obtained by protecting the surface of the micro concave-convex structural body 10 as described below.

### [Method for Producing Laminate]

The method for producing the laminate 1 of the invention includes: a step of disposing a curable resin composition as a protective film resin layer between the surface of the micro concave-convex structural body 10 and the protective film substrate 21 (also called "disposition step" hereinafter), a step of bonding the micro concave-convex structural body 10 and the protective film substrate 21 via the curable resin composition (also called "bonding step" hereinafter), and a step of curing the curable resin composition to obtain a cured product of the curable resin composition (also called "curing step" hereinafter), wherein the compressive elastic modulus of the cured product is 30 MPa or greater and is less than the compressive elastic modulus of the cured product of the material constituting the micro concave-convex structure.

With the method, the protective film substrate 21 and the protective film resin layer 22 being the cured product of the curable resin composition are integrated to form the protective film 20, and the laminate 1 protecting the surface of the micro concave-convex structural body 10 by the protective thin film 20 is obtained.

### <Micro Concave-convex Structural Body>

The micro concave-convex structural body 10 includes a substrate 11 and a cured product 12 having a micro concave-convex structure at its surface formed on the surface of the substrate 11, as shown in FIGs. 1 and 2. Moreover, the water contact angle of the surface of the micro concave-convex structural body 10 is 120° or greater. In view of exhibiting water repellency and oil repellency, the angle is preferably 130° or greater, more preferably 140° or greater.

### (Substrate)

The substrate 11 constituting the micro concave-convex structural body 10 only has to be able to support the cured product 12 having a micro concave-convex structure at its surface. In the case that the micro concave-convex structural body 10 is applied to, for instance, a display member, a transparent substrate, namely a transparent material, is preferred.

Examples of the material of the transparent substrate include: synthetic polymers (such as methyl methacrylate (co)polymer, polycarbonate, styrene (co)polymer, and methyl methacrylate-styrene copolymer), semi-synthetic polymers (such as cellulose diacetate, cellulose triacetate, and cellulose acetate butyrate), polyester (such as polyethylene terephthalate and polylactic acid), polyamide, polyimide, polyether sulfone, polysulfone, polyethylene, polypropylene, polymethylpentene, polyvinyl chloride, polyvinyl acetal, polyether ketone, polyurethane, and a composite of the above (such as a composite of polymethyl methacrylate and polylactic acid and a composite of polymethyl methacrylate and polyvinyl chloride), and glass.

The shape of the substrate 11 can be suitably selected according to the application of the micro concave-convex structural body 10, and in a case that the micro concave-convex structural body 10 is an anti-reflection film, a sheet shape or a film shape is preferred.

Examples of the method for producing the substrate 11 include: an injection molding method, an extrusion molding method, and a cast molding method.

A coating or corona treatment can also be applied to the surface of the substrate 11 to improve characteristics such as adhesion, anti-static properties, scratch resistance, and weather resistance.

### (Cured product)

The cured product 12 constituting the micro concave-convex structural body 10 has a micro concave-convex structure at its surface. The cured product 12 is formed by curing the material constituting the micro concave-convex structure. The micro concave-convex structure is formed from conical convex portions 13 and concave portions 14 arranged at a constant interval.

The period of the micro concave-convex structure, i.e., the distance w₁ from the top 13a of a convex portion 13 to the top 13a of an adjacent convex portion 13, is less than the wavelength of visible light.

In cases that the period of the micro concave-convex structure is less than the wavelength of visible light, i.e., less than 380 nm, scattering of visible light can be inhibited, and the micro concave-convex structure can be suitably used for an optical use such as an anti-reflection film.

To easily form the convex portion 13, the period of the micro concave-convex structure is preferably 25 nm or greater. Specifically, the period of the micro concave-convex structure is preferably 60 nm to 300 nm, more preferably 90 nm to 250 nm, still more preferably 140 nm to 220 nm, and most preferably 180 nm to 200 nm.

The period of the micro concave-convex structure is obtained by averaging the distances w₁ measured between 10 connected convex portions 13 with a field-emission SEM.

The height of the convex portion 13 (or the depth of the concave portion 14), i.e., the vertical distance d₁ from the top 13a of the convex portion 13 to the bottom 14a of the concave portion 14 is preferably set to a depth capable of inhibiting variation of reflectance caused by wavelength variation. Specifically, the distance d₁ is preferably 60 nm or greater, more preferably 90 nm or greater, still more preferably 150 nm or greater, and most preferably 180 nm or greater. In a case that the height of the convex portion 13 is close to 150 nm, the reflectance of a band light of 550 nm readily recognized by humans is at a minimum. In particular, in a case that the height of the convex portion 13 is 150 nm or greater, the greater the height of the convex portion 13, the smaller the difference between the maximal reflectance and the minimal reflectance of the visible light region. Therefore, in a case that the height of the convex portion 13 is 150 nm or greater, the wavelength dependence of the reflected light is smaller, and a difference in visual hue is unrecognizable.

From the viewpoint of good scratch resistance of the convex portion 13, the height of the convex portion 13 is preferably 400 nm or less.

The height of the convex portion 13 is obtained by averaging the values of heights (vertical distance d₁) measured from 10 convex portions 13 with a field emission-type SEM.

From the viewpoint of continuously increasing the refractive index and inhibit the variation (wavelength dependence) of reflectance with wavelength variation to inhibit scattering of visible light and achieve low reflectance, the shape of the convex portion 13 is preferably a shape in which the cross-sectional area of the vertical plane is continuously increased from the side of the top 13a toward the side of the substrate 11.

However, the micro concave-convex structural body 10 can exhibit water repellency via the material constituting the micro concave-convex structure. In a case that the micro concave- convex structural body 10 has water repellency, the micro concave-convex structural body 10 can be used as a water-repellent film outdoors or in the presence of water, and can inhibit the reduction of visibility caused by adherence of water droplets.

Moreover, via the material constituting the micro concave-convex structure, in addition to water repellency, oil repellency can also be exhibited. In a case that the micro concave-convex structural body 10 is used as an anti-reflection film or the like, generally, the micro concave- convex structural body 10 is bonded to the surface of a target object (such as a display) that is frequently touched by the hand of a user. Hence, preferably, fingerprints are difficult to adhere to the micro concave-convex structural body 10 during use. When the micro concave-convex structural body 10 has oil repellency, even attached fingerprints can be easily removed.

The method for evaluating water repellency or oil repellency of the micro concave-convex structural body generally including measuring the contact angle. The measurement may be performed using a commercial apparatus such as an automatic contact angle measuring device. Specifically, 1 µL of ion exchange water is added dropwise to the micro concave-convex structural body, and the water contact angle is calculated by the θ/2 method.

Under normal circumstances, a water contact angle of 90° or greater is determined to indicate water repellency in most cases, and, depending on the application, a water contact angle around 70° may sometimes be determined to indicate water repellency. Moreover, in principle, on a smooth surface, the water contact angle does not exceed 120°.

However, in a case that the surface has a micro concave-convex structure, the apparent water contact angle can be 120° or greater.

Moreover, air is pressed between the water droplet and the micro concave-convex structure, such that the apparent water contact angle becomes greater. Such a state is not necessarily the most stable energy state, and is also determined as a quasi-steady state. The cases of "water contact angle" in the invention also include the evaluation results under the quasi-steady state.

In a case that the water contact angle of the surface of the micro concave-convex structure is 120° or greater, the material used to form the micro concave-convex structure is not particularly limited. Preferably, the material suitably contains a monomer, an oligomer or a reactive polymer that has a radical polymerizable bond and/or a cationic polymerizable bond in the molecule, and may also contain a non-reactive polymer.

Moreover, the material constituting the micro concave-convex structure generally contains a polymerization initiator for curing, which may be a known polymerization initiator.

Generally known useful components for exhibiting water repellency include a fluorine- based compound, a silicone-based compound, a compound having an alicyclic structure, and a compound having a long-chain alkyl group, etc. Hence, by forming the micro concave-convex structure using a material containing one or more of the compounds, the water contact angle of the surface of the micro concave-convex structural body can be 120° or greater.

Here, the "long-chain alkyl group" refers to an alkyl group having 12 or more carbons.

Moreover, for a chemical substance, it is known that the surface energy is at minimum in a state that terminal groups of 3 F-atoms bonded to 1 C-atom are closely arranged, and good water repellency can be exhibited via the micro concave-convex structure of the surface. Via a self-similar structure of a so-called fractal structure, even a hydrophilic material can have water repellency, so a material constituting the micro concave-convex structure is not necessarily limited.

However, in a case that the micro concave-convex structure is formed by polymerizing or curing the material constituting the micro concave-convex structure, it is difficult to form a fractal structure surface intentionally. Thus, in general, water repellency is exhibited by suitably using a polymerizable component having a functional group that lowers the surface free energy.

Examples of the fluorine-based compound as a polymerizable component include: a compound having a polyfluoroalkyl chain, and a (meth)acrylate containing a fluoroalkyl group (specifically, 2,2,3,3-tetrafluoropropyl (meth)acrylate, 1,1,2,2-tetrafluoropropyl (meth)acrylate, 2,2,3,3,4,4,5,5-octafluoropentyl (meth)acrylate, 1,1,2,2,3,3,4,4-octafluoropentyl (meth)acrylate, or 1,1,2,2,3,3,4,4,5,5,6,6-dodecafluoroheptyl (meth)acrylate), etc. Moreover, a fluorinated urethane compound obtained by reacting a fluorinated alcohol and a compound having an isocyanuric group can also be used as the fluorine-based compound.

Examples of the silicone-based compound include a polymerizable component having a polydimethylsiloxane structure, such as a reactive silicone-based surfactant. Moreover, examples of the commercial products include Silaplane^{™} produced by Chisso Corporation.

Examples of the compound having an alicyclic structure include: isobornyl (meth)acrylate, adamantyl (meth)acrylate, dicyclopentyl (meth)acrylate, and dicyclopentenyl (meth)acrylate.

Examples of the compound having a long-chain alkyl group include: a (meth)acrylate having an alkyl group having 12 or more carbons, such as lauryl (meth)acrylate, hexadecyl (meth)acrylate, stearyl (meth)acrylate, or behenyl (meth)acrylate.

Moreover, in addition to the above mentioned, to exhibit water repellency, an acrylate (such as the polybutadiene acrylate "TEAI-1000" produced by Nippon Soda Co., Ltd.) having a hydrogenated polybutadiene structure, or the like can also be used.

Moreover, it is also possible to dispose a fluorine compound on the surface of a preformed micro concave-convex structural body by vapor deposition to exhibit water repellency.

However, after a water repellency treatment by such post-processing, the adhesion between the deposited layer for exhibiting water repellency and the original concave-convex structural body may be insufficient, thus causing peeling or falling of the deposited layer during use. Moreover, when the method for producing a laminate of the invention is applied, the deposited layer has a greater adhesion with the protective film resin layer of the protective film than the micro concave-convex structural body, such that the water repellency is less after peeling.

Therefore, the water repellency of the micro concave-convex structural body is preferably exhibited via the material constituting the micro concave-convex structure.

### (Method for producing micro concave-convex structural body)

Examples of the method for producing the micro concave-convex structural body include the following methods.

Method 1 includes performing injection molding or extrusion molding using a mold with a micro concave-convex structure formed at its surface.

Method 2 includes disposing the material constituting the micro concave-convex structure between a mold and a substrate, the material constituting the micro concave-convex structure is cured by irradiation with an active energy ray to transfer the micro concave-convex structure of the mold onto the cured product, and peeling the mold from the cured product.

Method 3 includes transferring a micro concave-convex structure of a mold onto the material constituting the micro concave-convex structure, peeling the mold from the material constituting the micro concave-convex structure, and curing the material constituting the micro concave- convex structure by irradiation with an active energy ray.

Among the methods, in terms of the transferability of the micro concave-convex structure and the degree of freedom of the surface composition, method 2 and method 3 are preferred, and method 2 is particularly preferred. Method 2 is particularly suitable in cases where a belt- or roll-shaped mold allowing continuous production is used, and has a good productivity.

Examples of the method constituting a micro concave-convex structure (an inverted structure) on a mold include an electron beam lithography method and laser interferometry. For instance, it is possible to coat a suitable photoresist film on the surface of a suitable support substrate, perform exposure with, for example, UV laser, electron beam or X-ray, and then perform development to obtain a mold on which a micro concave-convex structure is formed. It is also possible to perform selective etching on the support substrate with dry etching through a photoresist layer and remove the photoresist layer to form the micro concave-convex structure directly on the support substrate itself.

Moreover, anodized porous aluminum oxide can also be used as a mold. For instance, it is possible to use oxalic acid, sulfuric acid or phosphoric acid, etc. as an electrolyte to perform anodization on aluminum under a specific voltage to form a micropore structure having a period of 20 nm to 200 nm as the mold. After prolonged anodization is performed on the high-purity aluminum under a constant voltage with the method, the oxide film is temporarily removed, and then anodization is performed again to form a micropore having a very high regularity in a self-organizing manner. Moreover, in the second anodization step, a micropore for which the cross section is not rectangular but is triangular or bell-shaped may also be formed by combining the anodization treatment and pore-diameter enlargement. Moreover, the angle in the deepest portions of the micropore can be made sharper by suitably adjusting the time or conditions of the anodization treatment and the pore-diameter enlargement.

Moreover, it is also possible to fabricate a copy mold from a mother mold having a micro concave-convex structure, possibly using an electroforming method.

The shape of the mold itself is not particularly limited, and may be a flat-plate shape, a strip shape, or a roll shape, for example. In particular, in the case of a strip or roll shape, the micro concave-convex structure can be continuously transferred to further increase productivity.

Examples of the method of disposing the material constituting the micro concave-convex structure between the mold and a substrate include: a method in which pressing is performed on the mold and the substrate after the material constituting the micro concave-convex structure is disposed between the mold and the substrate to inject the material constituting the micro concave-convex structure into the micro concave-convex structure of the mold.

### (Application of micro concave-convex structural body)

As having a micro concave-convex structure having a period less than the wavelength of visible light at its surface, the micro concave-convex structural body is suitable for an optical use, especially an antireflection article such as an antireflection film or a 3D anti-reflection body. Moreover, the water contact angle of the surface of the micro concave-convex structural body is 120° or greater, so the micro concave-convex structural body has water repellency. Hence, the micro concave-convex structural body can be used in an application of a building material such as a window or a mirror, and can inhibit reduced visibility caused by adherence of water droplet.

### (Other forms of micro concave-convex structural body)

The micro concave-convex structural body is not limited to that shown in FIG. 1 or 2.

For instance, the cured product 12 having a micro concave-convex structure can be formed on a single surface of the substrate 11, or alternatively be formed on both sides.

Moreover, the micro concave-convex structure can be formed on the entire surface of the cured product 12, or alternatively be formed on a portion of the surface.

Moreover, the shape of the convex portion 13 is not limited to the conical shape or the pyramidal shape shown in FIG. 2, and may alternatively be a bell shape as shown in FIG. 3 in which the top 13b of the concave portion 13 has a curved surface. Moreover, a reverse bell shape, in which the top of the convex portion 13 has a tip shape and the bottom of the concave portion 14 has the shape of a curved surface, may alternatively be adopted. Moreover, a shape in which the cross-sectional area of a vertical plane continuously increases from the top side toward the substrate side can be included. Moreover, to make the micro concave-convex structural body 10 effectively exhibit water repellency, preferably, the top of the convex portion 13 is thin, and the area occupied by the cured product 12 in the contact surface of the micro concave-convex structural body 10 and a water droplet is preferably made minimal.

### Middle layer:

Moreover, as shown in FIG. 3, a middle layer 15 can also be disposed between the substrate 11 and the cured product 12 to increase, for instance, scratch resistance and adhesion.

Exemplary materials of the middle layer 15 include: acrylic resin, polyester, polyurethane, acrylic graft polyester, polyethyleneimine, polycarbonate, polybutadiene, styrene-based resin.

### <Protective film>

The protective film 20 protects the surface of the micro concave-convex structural body 10, and contains a protective film substrate 21 and a protective film resin layer 22. As shown in FIG. 1, the protective film 20 is bonded to the surface of the micro concave-convex structure side of the micro concave-convex structural body 10 in a manner such that the micro concave- convex structure of the micro concave-convex structural body 10 and the protective film resin layer 22 are connected.

The protective film usually includes a protective film substrate, and an adhesive layer (protective film resin layer) formed on the surface thereof. The protective film has to be bonded to an object to be protected, and has to be peeled off as required without leaving an adhesive residue. However, it is difficult to develop a suitable adhesive that has suitable adhesion toward the micro concave-convex structural body having water repellency and can be peeled off without leaving an adhesive residue.

However, in the method for producing a laminate of the invention, no pre-fabricated protective film is bonded to the surface of the concave-convex structural body, but a protective film is fabricated on the micro concave-convex structural body while protecting the surface of the concave-convex structural body. Specifically, a curable resin composition as a protective film resin layer 22 is disposed between the surface of the micro concave-convex structural body 10 and the protective film substrate 21 (disposition step), the micro concave- convex structural body 10 and the protective film substrate 21 are bonded via the curable resin composition (bonding step), and then the curable resin composition is cured (curing step). The protective film substrate 21 and the protective film resin layer 22 as the cured product of the curable resin composition are thus integrated to form the protective film 20, and the laminate 1 protecting the surface of the micro concave-convex structural body 10 with the protective film 20 is obtained.

Therefore, the method for producing a laminate of the invention is, for instance, a method *in-situ* producing the most suitable protective film while protecting the surface of the micro concave-convex structural body.

### (Protective film substrate)

The only requirement on the protective film substrate 21 constituting the protective film 20 is that the protective film substrate 21 has sufficient strength without causing damage to the surface of the micro concave-convex structural body 10 as the object to be protected.

Examples of the material of the protective film substrate 21 include: polyolefin resin (such as polyethylene, polypropylene, polyvinyl alcohol, or ethylene-vinyl alcohol copolymer), polycarbonate resin, fluorine-based resin (such as polyvinyl fluoride, polyvinylidene fluoride, or tetrafluoroethylene-perfluoroall:yl vinyl ether copolymer), chlorine-based resin (such as polyvinyl chloride or polyvinylidene chloride), acrylic resin (such as polymethyl methacrylate), sulfone-based resin (such as polyether sulfone), ketone-based resin (such as polyetherether ketone), polyester resin (such as polyethylene terephthalate or polyethylene naphthalate), polyimide, and polyamide. These can be used alone or in a combination of two or more.

When the curable resin composition is cured, it is generally irradiated with an active energy ray from the side of the protective film substrate 21, as described in details later. Therefore, the protective film substrate 21 is preferably transparent. Moreover, in a case that the transparency of the protective film substrate 21 is good, the state of the micro concave-convex structural body 10 can also be investigated through the protective film 20.

The material of the protective film substrate 21 is preferably polyolefin resin, polycarbonate resin, acrylic resin, or polyester resin, wherein polyester resin, especially thermoplastic polyester resin, is preferred, and polyethylene terephthalate is more preferred. Polyethylene terephthalate can yield a protective film substrate 21 having good transparency and good smoothness.

The flexural elastic modulus of the protective film substrate 21 is preferably 500 MPa to 4000 MPa, more preferably 1000 MPa to 3500 MPa, and still more preferably 2000 to 3200 MPa. In a case that the flexural elastic modulus is 500 MPa or greater, the protective effect of the protective film on the micro concave-convex structure can be sufficiently achieved. Hence, the micro concave-convex structure is still not easily damaged even if scratched through the protective film or if a load is applied thereto. Moreover, in a case that the flexural elastic modulus is 4000 MPa or less, the micro concave-convex structural body to which a protective film is attached can be readily wound.

The flexural elastic modulus of the protective film substrate 21 can be measured by the test method recited in JIS K 7171:2008 (ISO 178:2001).

In order to increase the adhesion with the protective film resin layer 22, a surface treatment such as a corona treatment or a plasma treatment, or a coating with bottom paint (primer), may also be performed on the surface of the side of the protective film substrate 21 connecting with the protective film resin layer 22.

The thickness can be suitably set according to the application of the protective film 20, and can be arbitrary as long as a sufficient adhesion can be obtained and the surface of the micro concave-convex structural body 10 can be protected from damage and so on when the protective film 20 is formed from the protective film substrate 21 and the protective film resin layer 22 and is bonded to the micro concave-convex structural body 10. The lower limit of the thickness of the protective film substrate 21 is generally around 12 µm or more, preferably 16 µm or more, more preferably 25 µm or more, and still more preferably 30 µm or more. Moreover, the upper limit of the thickness of the protective film substrate 21 is generally ~2 mm or less, preferably 1 mm or less, more preferably 100 µm or less, still more preferably 80 µm or less, and yet more preferably 50 µm or less. If the thickness of the protective film substrate 21 exceeds 2 mm, the adhesion is reduced as the protective film 20 is bonded to the micro concave-convex structural body 10. Moreover, if the thickness of the protective film substrate 21 is less than 12 µm, it is difficult to protect the micro concave-convex structural body 10 from damage and so on.

### (Protective film resin layer)

The protective film resin layer 22 constituting the protective film 20 is a cured product formed by curing a curable resin composition.

The curable resin composition is disposed between the surface of the micro concave-convex structural body 10 and the protective film substrate 21, and is made into the protective film resin layer 22 by curing the curable resin composition following the micro concave-convex structure. Thus, the curable resin composition is a material constituting the protective film resin layer 22 for forming an optimal protective film 20 of the concave-convex structure 10.

With the protective film 20 constituted of the protective film resin layer 22 and the protective film substrate 21, damage to the micro concave-convex structural body 10 during transport or various processing is prevented. Moreover, before the micro concave-convex structural body 10 is used as, e.g., an anti-reflection film or a water-repelling film, the protective film 20 is peeled off. Hence, the protective film resin layer 22 and the micro concave-convex structural body 10 need to be peelable, and ideally, the protective film resin layer 22 and the protective film substrate 21 are connected together and the protective film resin layer 22 can be peeled from the micro concave-convex structural body 10 without residue (adhesive residue).

To meet such requirement, the compressive elastic modulus of the cured product (i.e., protective film resin layer 22) of the curable resin composition is 30 MPa or greater and is less than the compressive elastic modulus of the cured product (i.e., the cured product 12 constituting the concave-convex structural body 10) of the material constituting the concave-convex structure.

In a case that the compressive elastic modulus of the cured product of the curable resin composition is 30 MPa or greater, when the protective film 20 is peeled from the micro concave- convex structural body 10, tearing (cohesive failure) of the protective film resin layer 22 can be prevented, so that the protective film 20 can be peeled from the micro concave-convex structural body 10 without the protective film resin layer 22 (adhesive residue) remaining on the surface of the micro concave-convex structural body 10. The compressive elastic modulus of the cured product of the curable resin composition is preferably 40 MPa to 270 MPa, more preferably 80 MPa to 250 MPa, and still more preferably 150 MPa to 250 MPa. When the compressive elastic modulus of the cured product of the curable resin composition is 270 MPa or less, the laminate 1 can be readily wound into a roll.

Moreover, in a case that the compressive elastic modulus of the cured product of the curable resin composition is less than the compressive elastic modulus of the cured product of the material constituting the micro concave-convex structure, when the protective film 20 is peeled from the micro concave-convex structural body 10, tearing of the protective film substrate 21 or shredding of the convex portion of the concave-convex structure can be prevented. Preferably, the compressive elastic modulus of the cured product of the curable resin composition is 20 MPa to 250 MPa less than the compressive elastic modulus of the cured product of the material constituting the micro concave-convex structure, more preferably 80 MPa to 220 MPa less.

The compressive elastic modulus of the cured product of the curable resin composition and the compressive elastic modulus of the cured product of the material constituting the micro concave-convex structure are difficult to measure in the state of the laminate 1 or the micro concave-convex structural body 10, and therefore may be measured as follows.

First, a curable resin composition or a material constituting the micro concave-convex structure are respectively cured by light and formed into plates of 2 mm thick. The conditions of light curing are the same as those set while the micro concave-convex structural body 10 is protected or those set while the micro concave-convex structural body 10 is produced.

Then, each of the obtained plates is cut into a test piece of 1 cm², and a compression is performed thereon via a compression testing machine at a speed of 0.5 mm/min in the thickness direction to measure the elastic modulus at a compression percentage of 20%. Moreover, the so-called compression percentage of 20% refers to, for instance, a state when the test piece of 5 mm thick originally is compressed to 1 mm which is equal to 20% of 5 mm.

In the invention, the values measured above are taken as the compressive elastic modulus of the protective film resin layer 22 and the compressive elastic modulus of the cured product 12.

Moreover, preferably, the cohesion force of the cured product of the curable resin composition is greater than the adhesion force between the cured product (i.e., protective film resin layer 22) of the curable resin composition and the micro concave-convex structural body, and the adhesion force between the cured product of the curable resin composition and the protective film substrate is greater than the adhesion force between the cured product of the curable resin composition and the micro concave-convex structural body.

The so-called cohesion of the cured product of the curable resin composition refers to the force between the molecules constituting the curable resin composition, and is the strength of the curable resin composition. In the action that the protective film is peeled from the micro concave-convex structural body, in a microscopic view, the protective film resin layer being a cured product of the curable resin composition is stretched between the micro concave-convex structural body and the protective film substrate.

If the cohesion force of the cured product of the curable resin composition is weaker than the adhesion force between the cured product of the curable resin composition and the micro concave-convex structural body, the resin itself cannot sustain the force of peeling the protective film resin layer from the micro concave-convex structural body, such that the protective film resin layer is shredded and adhesive residue is generated. Therefore, to peel the protective film resin layer from the micro concave-convex structural body, ideally, the cohesion force of the cured product of the curable resin composition is great. In particular, in a case that the height of the convex portion of the micro concave-convex structure is great (depth of concave portion is great), that is, if the structure is viewed as one having standing protrusions and the height of the protrusion relative to the width of the same and the aspect ratio are great, a greater force is needed to peel off the protective film resin layer. As a result, a greater cohesion is ideal.

Moreover, as the adhesion force of the cured product of the curable resin composition and the protective film substrate is greater than the adhesion force between the cured product of the curable resin composition and the micro concave-convex structural body, tearing of the protective film substrate can be prevented when the protective film is peeled from the micro concave-convex structural body.

Hence, by using a curable resin composition of which the cured product has a cohesion force greater than the adhesion force between the cured product of the curable resin composition and the micro concave-convex structural body and has an adhesion force to the protective film greater than the adhesion force between the cured product of the curable resin composition and the micro concave-convex structural body, the protective film substrate and the protective film resin layer as the cured product of the curable resin composition are integrated, and if required, the curable resin composition can be more easily peeled from the micro concave-convex structural body without leaving an adhesive residue.

Moreover, the cohesion force of the cured product of the curable resin composition can be measured with a tensile test, but is difficult to measure in the state of the laminate 1. Hence, the cured product obtained by light-curing the curable resin composition is usually processed into a regular shape of, for instance, a dumbbell, and the measurement is performed based on industry specifications such as ISO 527-2:1993. In the invention, the value measured above is taken as the cohesion force of the protective film resin layer 22.

However, the cured product of a curable resin composition is brittle in general, so the cured product is difficult to be punched into a regular shape such as a dumbbell shape. In such case, a compression test is performed by cutting the cured product of the curable resin composition to, e.g., a square shape, and the elastic modulus at arbitrary compression percentage is measured instead of the cohesion measurement. That is, the compressive elastic modulus of the cured product of the curable resin composition can also be used as an indicator of the cohesion force.

Moreover, the adhesion force between the cured product of the curable resin composition and the micro concave-convex structural body or the adhesion force between the cured product of the curable resin composition and the protective film substrate can be measured with, for instance, a 90° peel test or a 180° peel test.

Moreover, the peel strength (peel force) in peeling the protective film 20 formed by integrating the protective film substrate 21 and the protective film resin layer 22 from the micro concave-convex structural body 10 only has to be at a level such that adhesion with the micro concave-convex structural body 10 is possible, and is, relative to the micro concave-convex structural body 10, preferably 0.01 N/25 mm to 5 N/25 mm, more preferably 0.01 N/25 mm to 3 N/25 mm, and still more preferably 0.015 N/25 mm to 1 N/25 mm. When the peel strength of the protective film 20 is within the above range, it can be generally determined that the adhesion force between the cured product (protective film resin layer) of the curable resin composition and the protective film substrate is greater than the adhesion force between the cured product and the micro concave-convex structural body. Hence, the protective film 20 can be adhered to the micro concave-convex structural body 10 in a sufficient strength and does not easily peel off. Moreover, if not needed, the protective film 20 can be easily peeled from the micro concave-convex structural body 10 without leaving an adhesive residue.

The peel strength of the protective film 20 can be measured as follows.

First, a curable resin composition is disposed between the surface of the micro concave- convex structural body 10 and the protective film substrate 21. After the micro concave-convex structural body 10 and protective film substrate 21 are bonded via the curable resin composition, the curable resin composition is cured to form a protective film 20 integrated from the protective film substrate 21 and the protective film resin layer 22, and the laminate 1 on which the surface of the concave-convex structural body 10 is protected by the protective film 20 is obtained.

Regarding the obtained laminate 1, under the conditions of a peel angle of 180°, a peel speed of 300 mm/min, and room temperature, the peel strength when the protective film 20 is peeled off from the length direction of the laminate 1 is measured. The measurement of peel strength can be performed using, for instance, Universal Testing Machine 5565 made by Instron.

As long as satisfying the above ranges of compressive elastic modulus, cohesion, and adhesion, the curable resin composition is not particularly limited. For instance, to increase the adhesion with the protective film substrate 21, the curable resin composition preferably contains a polymerizable component having a molecular weight of 230 or less, i.e., a low molecular weight polymerizable component).

Examples of the low molecular weight polymerizable component include a monofunctional acrylate such as methyl acrylate, ethyl acrylate, 2-hydroxyethyl acrylate, benzyl acrylate, phenyl acrylate, phenoxyethyl acrylate, acryloylmorpholine, N-vinylpyrrolidone, or N-vinyl formamide, and a difunctional acrylate such as 1,4-butanediol diacrylate, 1,6-hexanediol diacrylate, or diethylene glycol diacrylate. These can be used alone or in a combination of two or more.

It is known that a polymerizable component having a lower molecular weight more easily entered into a resin in general. As the molecular weight is 230 or less, the permeability of the curable resin composition into the protective film substrate 21 is increased, and the adhesion of the protective film substrate 21 and the protective film resin layer 22 is increased.

Moreover, when the molecular weight of the polymerizable component is reduced, the curable resin composition also permeates into the cured product 12 of the micro concave-convex structural body 10. In a case that the curable resin composition permeates in the cured product 12 of the micro concave-convex structural body 10 and is chemically combined, the protective film 20 is not easily peeled from the micro concave-convex structural body 10 without leaving an adhesive residue.

The permeability of the curable resin composition in the cured product 12 of the micro concave-convex structural body 10 is affected by, for instance, the molecular weight of the low molecular weight polymerizable component, the compatibility of the low molecular weight polymerizable component with the cured product 12 of the micro concave-convex structural body 10, and the combination of other polymerizable components in the curable composition. Hence, preferably, a low molecular weight polymerizable component and the combination of other polymerizable components are selected, or the type or content of the low molecular weight polymerizable components is changed, in a manner such that permeability of the curable resin composition in the cured product 12 of the micro concave-convex structural body 10 is avoided.

When the total amount of all the polymerizable components contained in the curable resin composition is set to 100 mass%, the content of the low molecular weight polymerizable component in the curable resin composition is preferably 5 mass% to 50 mass%. In the case that the content of the low molecular weight polymerizable component is 5 mass% or greater, the adhesion with the protective film substrate 21 is better. When the content of the low molecular weight polymerizable component is 50 mass% or less, the adhesion to the cured product 12 of the micro concave-convex structural body 10 can be inhibited.

In a case that the protective film substrate 21 is a polyethylene terephthalate film having been subjected to adhesion-improving processing, the content of the low molecular weight polymerizable component in the curable resin composition is preferably 5 mass% to 50 mass%, and more preferably 5 to 30 mass%. Moreover, in a case that the protective film substrate 21 is a polycarbonate film, the content of the low molecular weight polymerizable component in the curable resin composition is preferably 20 to 50 mass%, and more preferably 30 to 50 mass%.

Moreover, even if the molecular weight is 230 or greater, the adhesion to the protective film substrate 21 can also be exhibited by using a compound containing a urethane bond that is capable of forming hydrogen bonds in a high density.

The curable resin composition generally contains an additive (such as polymerization initiator) for curing the curable resin composition. The curing may be thermal polymerization/ thermal curing due to heating. However, in a case that the micro concave-convex structural body is continuously produced, desirably, protection can be simply performed before the step of winding the fabricated micro concave-convex structural body. Preferably, photopolymerization or light curing by irradiation with an active energy ray such as UV light is adopted.

The active energy ray polymerization initiator is cleaved by the active energy ray irradiation to form a compound of a free radical initiating a polymerization reaction. From the viewpoint of apparatus cost or productivity, UV light is preferred for the active energy ray.

Examples of the active energy ray polymerization initiator include: benzophenone, 4,4-bis(diethylamino)benzophenone, 2,4,6-trimethyl-benzophenone, methyl-*o*-benzoyl benzoate, 4-phenylbenzophenone, *t*-butylanthraquinone, 2-ethylanthraquinone, thioxanthone species (such as 2,4-diethyl thioxanthone, isopropyl thioxanthone, or 2,4-dichlorothioxanthone), acetophenone species (such as diethoxyacetophenone, 2-hydroxy-2-methyl-1-phenylpropan-1-one, benzil dimethyl ketal, 1-hydroxycyclohexyl-phenyl ketone, 2-methyl-2-morpholino(4-thiomethyl-phenyl)propan-1-one, or 2-benzyl-2-dimethylamino-1-(4-morpholinophenyl)-butanone), benzoin ether species (such as benzoin methyl ether, benzoin ethyl ether, benzoin isopropyl ether, or benzoin isobutyl ether), acyl phosphine oxide species (such as 2,4,6-trimethylbenzoyl diphenyl phosphine oxide, bis(2,6-dimethoxybenzoyl)-2,4,4-trimethyl pentyl phosphine oxide, or bis(2,4,6-trimethyl benzoyl)-phenyl phosphine oxide), methylbenzoyl formate, 1,7-bis-acridinyl-heptane, and 9-phenyl acridine. The active energy ray polymerization initiators can be used alone or in combination of two or more. Preferably, two or more active energy ray polymerization initiators having different absorption wavelengths are used together.

Moreover, as required, a thermal polymerization initiator, such as a peroxide (a persulfate such as potassium persulfate or ammonium persulfate, or benzoyl peroxide, etc.) or an azo-based initiator, can also be used in combination.

Relative to the sum of 100 mass parts of all the polymerizable components contained in the curable resin composition, the content of the active energy ray polymerization initiator in the curable resin composition is preferably 0.01 mass part to 10 mass parts, more preferably 0.1 mass part to 5 mass parts, and still more preferably 0.2 mass part to 3 mass parts. When the content of the active energy ray polymerization initiator is not less than 0.01 mass part, the curability of the curable resin composition is good, and the mechanical properties of the protective film resin layer 22, especially the scratch resistance, is good. Moreover, unreacted polymerizable components can be sufficiently reduced to prevent contamination to the micro concave-convex structural body 10 caused by permeation of the unreacted components, or generation of adhesive residue to the micro concave-convex structural body 10 due to weakened cohesion of the protective film resin layer 22 containing the unreacted components. When the content of the active energy ray polymerization initiator is not more than 10 mass parts, reduction of elastic modulus and scratch resistance or coloring, which would be caused by the polymerization initiator remaining inside the protective film resin layer 22, can be inhibited.

Moreover, the curable resin composition may also contain, for instance, an active energy ray absorbent or an antioxidant.

Preferably, the active energy ray absorbent can absorb the emitted active energy ray when the curable resin composition is cured and inhibit degradation of resin. Examples of the active energy ray absorbent include: a benzophenone-based UV absorbent, a benzotriazole-based UV absorbent, and a benzoate-based UV absorbent. Examples of the commercial products include 400 or 479 of the Tinuvin series produced by Ciba Specialty Chemicals Co., Ltd. or 110 of the Viosorb series produced by Common Drug Co.

Examples of the antioxidant include: a phenol-based antioxidant, a phosphorus-based antioxidant, a sulfur-based antioxidant, and a hindered amine-based antioxidant. Examples of the commercial products include the Irganox series from Ciba Specialty Chemicals Co., Ltd.

The active energy ray absorbent and the antioxidant can be used alone or in combination of two or more.

Relative to the sum of 100 mass parts of all the polymerizable components contained in the curable resin composition, the content of the active energy ray absorbent and/or the antioxidant in the curable resin composition is preferably 0.01 mass part to 5 mass parts, more preferably 0.01 mass part to 1 mass part, and still more preferably 0.01 mass part to 0.5 mass parts. When the content of the active energy ray absorbent and/or the antioxidant is not less than 0.01 mass part, yellowing or hazing of the protective film resin layer 22 can be inhibited to increase the weather resistance. When the content of the active energy ray absorbent and/or the antioxidant is not more than 5 mass parts, the curability of the curable resin composition, the scratch resistance of the protective film resin layer 22, and the adhesion between the protective film resin layer 22 and the protective film substrate 21 are good.

Moreover, as required, the curable resin composition may contain other additive, such as a release agent, a lubricant, a plasticizing agent, an antistatic agent, a light stabilizer, a flame retardant, a flame retardant promoter, a polymerization inhibitor, a filler, a silane coupling agent, a colorant, an enhancer, an inorganic filler, or an impact-resistant modifier.

Moreover, the curable resin composition may also contain a solvent, but preferably does not contain a solvent. In a case that a solvent is not included, for instance, in the process of disposing a curable resin composition between the surface of the micro concave-convex structural body 10 and the protective film substrate 21 and irradiating the curable resin composition with an active energy ray to polymerize and cure the same to form the protective film resin layer 22, the solvent does not remain in the protective film resin layer 22. Moreover, considering the production steps, equipment investment for removing a solvent is not required. This is preferred from the viewpoint of the cost.

In each of the steps of disposing the curable resin composition between the surface of the micro concave-convex structural body 10 and the protective film substrate 21, bonding them by applying arbitrary pressure possibly with a roller, and curing, considering the workability, the viscosity of the curable resin composition measured using a rotary E-type viscometer at 25°C is preferably 10000 mPa·s or less, more preferably 3000 mPa·s or less, and still more preferably 500 mPa·s or less. The details are provided later. In particular, even if the viscosity of the curable resin composition is 10000 mPa·s or more, as long as the curable resin composition disposed between the surface of the micro concave-convex structural body 10 and the protective film substrate 21 can be pre-heated to reduce the viscosity, it can also be used without loss of workability. The viscosity of the curable resin composition measured with a rotary E-type viscometer at 70°C is preferably 3000 mPa·s or less, and more preferably 500 mPa·s or less.

Moreover, in a case that the micro concave-convex structural body 10 is continuously protected on a line continuously producing the micro concave-convex structural body 10 in a film or sheet form, in terms of the workability, the viscosity of the curable resin composition measured by a rotary E-type viscometer at 25°C is preferably 10 mPa·s or more, more preferably 30 mPa·s or more, still more preferably 50 mPa·s or more, and even more preferably 100 mPa·s or more. When the viscosity is 10 mPa·s or more, it is easy to prevent the curable composition from exceeding the width of the micro concave-convex structural body and leaking to the side in the bonding step, or to arbitrarily adjusting the thickness of the protective film resin layer 22.

The viscosity of the curable resin composition can be adjusted by regulating the type or content of the monomer (polymerizable component). Specifically, if a monomer having a functional group or a chemical structure having an intermolecular interaction such as a hydrogen bond is used in a large amount, the viscosity of the curable resin composition tends to be high. If a low molecular weight monomer without an intermolecular interaction is used in a large amount, the viscosity of the curable resin composition tends to be low.

The thickness of the protective film resin layer 22 is not particularly limited, and is preferably 3 µm to 100 µm, more preferably 3 µm to 50 µm, and still more preferably 3 µm to 30 µm. When the thickness of the protective film resin layer 22 is not less than 3 µm, the surface of the micro concave-convex structural body can be protected from occurrence of a pinhole and so on. On the other hand, win the case that the thickness of the protective film resin layer 22 is not more than 100 µm, the micro concave-convex structural body 10 to which the protective film 20 is bonded can be easily wound to facilitate practical use, and also the material cost is reduced.

### <Protection of micro concave-convex structural body>

The surface of the micro concave-convex structural body 10 is protected using a curable resin composition.

Specifically, a curable resin composition is disposed between the surface of the micro concave-convex structural body 10 and the protective film substrate 21 (disposition step), the micro concave-convex structural body 10 and the protective film substrate 21 are bonded via the curable resin composition (bonding step), and then the curable resin composition is cured in a manner such that the compressive elastic modulus of the cured product of the curable resin composition is 30 MPa or greater and is less than the compressive elastic modulus of the cured product of the material constituting the micro concave-convex structure (curing step). In the curing step, preferably, the curable resin composition is cured by active energy ray irradiation, and more preferably, the curable resin composition is irradiated with an active energy ray from the side of the protective film substrate 21.

With the method, the protective film substrate 21 and the protective film resin layer 22 as a cured product of the curable resin composition are integrated to form the protective thin film 20, and the laminate 1 protecting the surface of the micro concave-convex structural body 10 with the protective thin film 20 is obtained.

The method for disposing the curable resin composition is not particularly limited. For instance, it is possible to coat the curable resin composition onto the surface of the micro concave-convex structural body 10 and then cover the same by the protective film substrate 21. Alternatively, the curable resin composition is filled between the surface of the micro concave-convex structural body 10 and the protective film substrate 21.

Examples of the method for bonding the micro concave-convex structural body 10 and the protective film substrate 21 include a pressing method possibly using a roller. The pressure on the pressing is preferably 0.01 MPa to 1 MPa, and more preferably 0.05 MPa to 0.5 MPa. When the pressure is not less than 0.01 MPa, the micro concave-convex structural body 10 and the protective film substrate 21 can be sufficiently bonded. When the pressure is not more than 1 MPa, the convex portion of the micro concave-convex structure is not easily damaged.

The active energy ray is preferably UV light. Examples of the lamp used for the UV irradiation include a high-pressure mercury lamp, a metal halide lamp, and a fusion lamp.

The irradiation amount of UV light may simply be determined according to the absorption wavelength or content of the polymerization initiator contained in the curable resin composition. Typically, the cumulative amount of light thereof is preferably 400 to 4000 mJ/cm², and more preferably 400 to 2000 mJ/cm². When the cumulative amount is not less than 400 mJ/cm², the curable resin composition can be sufficiently cured to inhibit reduction of scratch resistance caused by insufficient curing. When the cumulative amount is not more than 4000 mJ/cm², coloring of the protective film resin layer 22 or degradation of the protective film substrate 21, etc. can be prevented. The irradiation intensity is also not particularly limited, and is preferably suppressed to an output level not causing degradation of the protective film substrate 21 etc.

The laminate 1 containing the micro concave-convex structural body 10 protecting the surface via the protective film 20 is obtained with the above method.

When the micro concave-convex structural body 10 is in a film or sheet form, the laminate 1 may be in the form of a laminate film having a specified size, or in the form of a roll.

### <Effects>

The method for producing a laminate of the invention described above is different from the conventional method in which a pre-prepared protective film is bonded to the surface of the micro concave-convex structural body, as curing the curable resin composition on the micro concave-convex structural body following the micro concave-convex structure to integrate with the protective film substrate and form the protective film. With the method, the micro concave-convex structural body has a low surface free energy and is not changed itself, so the interaction between the micro concave-convex structural body and the protective film resin layer as the cured product of the curable resin composition is small. However, because the curable resin composition is disposed between the surface of the micro concave-convex structural body and the protective film substrate and then cured, the curable resin composition readily enters into the concave portions of the micro concave-convex structural body to exhibit a suitable adhesion force. Therefore, even if the micro concave-convex structural body has a low surface free energy causing water repellency, the protective film still does not easily peel off. Moreover, by using a specific curable resin composition, the protective film can be easily peeled off without leaving an adhesive residue, if necessary.

Moreover, in a laminate obtained with the invention, the surface of the micro concave- convex structural body is protected via the protective film, so damages to the micro concave- convex structure during shipping, transport or storage can be prevented. Moreover, adhesive residue is not easily left on the micro concave-convex structure as the protective film is peeled off, so a micro concave-convex structural body maintaining higher anti-reflective properties can be provided. Moreover, since an adhesive residue is not easily left, a micro concave-convex structural body of which the surface has a water contact angle not being easily changed before and after protection and maintains good water repellency can be provided.

Moreover, when the transparency of the protective film substrate or the protective film resin layer constituting the protective film is good, the state of the micro concave-convex structure can be investigated through the protective film without peeling off the protective film.

The investigation for the state of the micro concave-convex structure may include: measurement of quantitative optical properties such as total light transmittance, haze value and reflectance, detection of product defects, and so on.

### [Article]

The article of the invention is formed by peeling the protective film integrated from the protective film substrate and the protective film resin layer from the laminate, namely the micro concave-convex structural body after the protective film is peeled off. Alternatively, the article of the invention is formed by peeling the micro concave-convex structural body from the laminate of the invention, namely the peeled-off protective film.

The amount of the adhesive residue on the micro concave-convex structure after the protective film is peeled off is small. That is, the surface contamination of the micro concave-convex structural body caused by the adhesive of the protective film is inhibited. Hence, after the protective film is peeled, the micro concave-convex structural body maintains anti-reflection properties of the micro concave-convex structural body before the protective film is peeled. Moreover, since little adhesive residue is present on the micro concave-convex structure after the protective film is peeled from the micro concave-convex structural body, the water contact angle of the surface of the micro concave-convex structural body is not easily changed before and after the protective film is peeled, and therefore good water repellency can be exhibited.

The micro concave-convex structural body after the protective film is peeled is suitable for an application such as a building material (such as wall or rooftop), a window material (such as residential, automobile, electric vehicle, or boat vessel), mirror, or a display requiring anti-reflection properties.

Moreover, after the protective film is peeled, a structure formed by inverting the micro concave-convex structure is formed on the surface of the protective film resin layer. Therefore, the protective film after peeling can, similar to the micro concave-convex structural body after the protective film is peeled, exhibit anti-reflection properties, and can be used as an anti-reflection film. Moreover, the protective film after peeling can also be taken as a template and be reused as a mold for transferring the micro concave-convex structure.

### [Examples]

The invention will be more specifically described below with examples, but is not limited to the examples.

### [Various tests and evaluation methods]

### 1) Measurement of micropores of mold:

Platinum was evaporated on the longitudinal section of a portion of a mold containing an anodized porous aluminum oxide for 1 min, and then observation was performed using a field emission-type SEM (made by Japan Electronics Corp., JSM-7400F) at an accelerating voltage of 3.00 kV to measure the distance (period) between adjacent micropores and the depth of the micropores. Specifically, 10 points were respectively measured, and the average value thereof was taken as the measured value.

### 2) Measurement of convex portions of micro concave-convex structural body:

Platinum was evaporated on the longitudinal section of the micro concave-convex structural body for 10 min, and the distance (period) between adjacent convex portions and the height of the convex portions were measured with the same apparatus under the same conditions as 1). Specifically, 10 points were respectively measured, and the average value thereof was taken as the measured value.

### 3) Water contact angle on surface of micro concave-convex structural body:

1 µL of ion exchange water was added dropwise to the surface of the micro concave-convex structural body, and an automatic contact angle measuring device (made by KRUSS) was used to calculate the contact angle with the θ/2 method.

### 4) Measurement of reflectance:

After surface the surface of the micro concave-convex structural body opposite to the micro concave-convex structure is roughened with a sandpaper (GRITNo. 500) and painted black to make a sample, measurement of relative reflectance was performed thereon under the condition of an incident angle of 5° by using a spectrophotometer (U-4100, made by Hitachi, Ltd.) at the wavelength of 550 nm.

### 5) Measurement of compressive elastic modulus of cured product of material constituting micro concave-convex structure:

The material constituting the micro concave-convex structure was poured into a cell of 2 mm thick formed by a spacer and glass plates, and the cell was light-cured by UV irradiation under the same conditions as the manufacture of the micro concave-convex structural body to obtain a plate-like sample having of 2 mm thick. A chip cut into a size of ~1 cm² from the plate-shaped sample was used as the test piece, and the chip was compressed in a compression percentage of 50% in a compression testing machine at a rate of 0.5 mm/min to obtain a stress-strain curve. The compressive elastic modulus at the compression percentage of 20% was measured.

### 6) Measurement of viscosity of curable resin composition:

The viscosity of the curable resin composition at 25°C was measured using a rotary E-type viscometer ("RE-80R," made by Toki Sangyo Co., Ltd.).

### 7) Measurement of compressive elastic modulus of cured product of curable resin composition:

The curable resin composition as the material for constituting the protective film resin layer constituting the protective film was poured into a cell of 2 mm thick formed by a spacer and glass plates, and was UV-irradiated under the same conditions as in the case of protecting the surface of the micro concave-convex structural body, such that the curable resin composition was light-cured to obtain a plate-like sample of 2 mm thick. A chip cut into a size of ~1 cm² from the plate-shaped sample was used as the test piece, and compressive elastic modulus was measured with the same apparatus and conditions as 5) at a compression percentage of 20%.

### 8) Evaluation of adhesion

The adhesion of the protective film was evaluated based on the evaluation criteria below by visually observing the state of the obtained laminate (micro concave-convex structural body to which a protective film was bonded) cut by a pressure-cut tailoring machine.
○: protective film did not peel from micro concave-convex structural body.
×: protective film peeled from micro concave-convex structural body.

### 9) Evaluation of windability

The windability of the laminate was evaluated based on the following evaluation criteria by visually observing the laminate rolled into a diameter of 3 cm with the micro concave-convex structure facing inside.
○: cracking or wrinkling caused by, for instance, breaking of protective film resin layer constituting the protective film did not occur.
Δ: cracking or wrinkling caused by, for instance, breaking of protective film resin layer constituting the protective film did not occur, but the protective film resin layer was stiff and the force required to restore the bend was strong so that power was required for the winding; or, a creaking sound was produced during the winding.
×: cracking or wrinkling caused by, for instance, breaking of protective film resin layer constituting the protective film occurred.

### 10) Evaluation of peeling and adhesive residue

The protective film was peeled from the obtained laminate. Good peeling is denoted as "○", and poor peeling is denoted as "×".

Moreover, the water contact angle of the surface of the micro concave-convex structural body was measured as in 3) after the protective film was peeled to obtain the difference from the water contact angle of the surface of the micro concave-convex structural body before protection. Moreover, the reflectance of the micro concave-convex structural body was measured as in 4) to obtain the difference from that of the micro concave-convex structural body before protection.

The peelability and adhesive residue were evaluated based on the evaluation criteria below.
○: good peeling, difference in water contact angle within ±5°, and difference in reflectance within ±0.1%.
Δ: good peeling, but difference in water contact angle exceeds ±5° and/or difference in reflectance exceeds ±0.1%.
×: poor peeling, difference in water contact angle exceeds ±5°, and difference in reflectance exceeds ±0.1%.

### [Fabrication of mold]

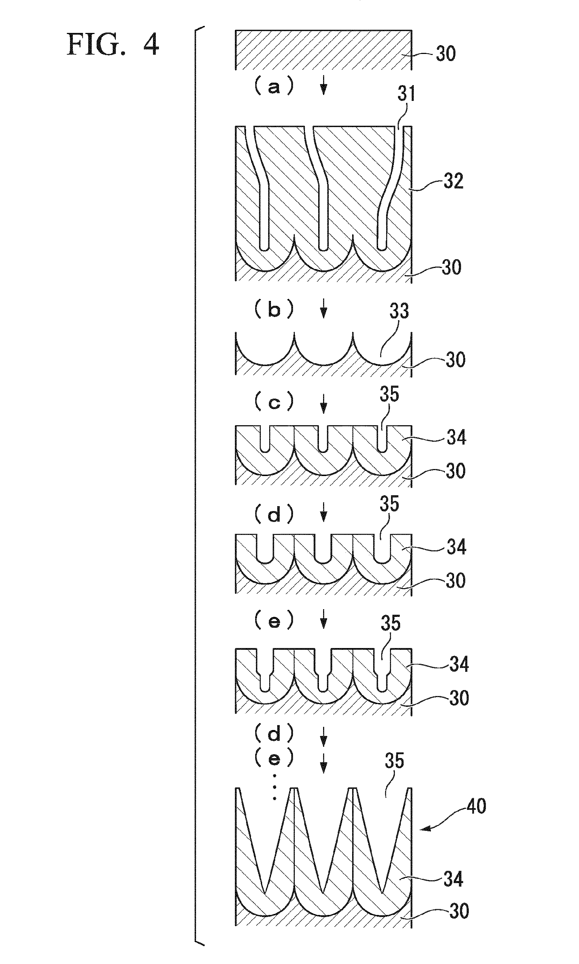

A mold (depth of micropore: 180 nm) was fabricated as follows according to the steps illustrated in FIG. 4.

First, an aluminum plate 30 having a purity of 99.99% was subjected to abrasive cloth polishing, and then to electrolytic polishing in perchloric acid/ethanol mixing solution (volume ratio=1/4) to have a mirror surface. Next, the following steps a) to f) were performed.

### Step a):

Anodization was performed on the aluminium plate 30 in a 0.3 M aqueous solution of oxalic acid under the conditions of 40 V and a temperature of 16°C for 30 min to form micropores 31 on the oxide film 32.

### Step (b):

The aluminum plate 30 on which the oxide film 32 was formed was immersed in a mixture aqueous solution of 6 mass% of phosphoric acid and 1.8 mass% of chromic acid for 6 hours to remove the oxide film 32 and expose periodic pits 33 corresponding to the micropores 31.

### Step c):

Anodization was performed on the aluminum plate 30 with the exposed pits 33 in a 0.3 M aqueous solution of oxalic acid, under the conditions of a direct current of 40 V and a temperature of 16°C for 30 sec, to form an oxide film 34 having micropores 35.

### Step d):

The aluminum plate on which the oxide film 34 was formed was immersed in phosphoric acid of 5 mass% at 32°C for 8 min to perform diameter enlargement on the micropores 35.

### Step e):

Anodization was performed on the aluminum plate 30 that had been subjected to diameter enlargement, in a 0.3 M aqueous solution of oxalic acid under the conditions of a direct current of 40 V and a temperature of 16°C for 30 sec to form micropores 35 having a smaller diameter as extending downward from the original micropores 35.

### Step f):

Steps d) and e) were repeated 4 times with step e) being performed last to obtain anodized porous aluminum oxide that had micropores 35 having a nearly conical shape, an average spacing (period) of 100 nm, and a depth of 180 nm.

The obtained anodized porous aluminum oxide was washed using deionized water, subjected to water removal from its surface using a blower, immersed in a solution containing a surface antifouling coating agent ("Optool DSX," from Daikin Industries, Ltd.) in a solid content of 0.1 mass% in a diluent ("HD-ZV," from HARVES Corp.) for 10 min, and then air-dried for 20 hours to obtain a mold 40.

### [Manufacture of micro concave-convex structural body (1)]

### <Preparation of material (1) constituting micro concave-convex structure>

45 parts of a mixture formed by reacting trimethylol ethane, succinic acid and acrylic acid in a molar ratio of 2/1/4, 45 parts of 1,6-hexanediol diacrylate, 10 parts of a silicone diacrylate ("x-22-1602," from Shin-Etsu Chemical Co., Ltd.), and 1.0 part of "Irgacure 184" and 0.1 part of "Irgacure 819" both from Japan Ciba-Geigy Co., Ltd. as an active energy ray polymerization initiator were mixed and uniformly dissolved to prepare material (1) constituting the micro concave-convex structure.

The compressive elastic modulus of the cured product of the obtained material (1) constituting the micro concave-convex structure was measured. The result is shown in Table 1.

### <Fabrication of micro concave-convex structural body (1)>

Material (1) constituting the micro concave-convex structure was heated to 50°C and flowed to a surface of a mold having been formed with micropores and heated to 50°C. Then, the surface was covered by a polyethylene terephthalate ("PET" hereinafter) film ("WE97A," from Mitsubishi Plastics Co., Ltd.,) of 38 µm thick as a substrate and was pressed to spread. Then, a fusion lamp was used for UV irradiation from the film side at a belt speed of 6.0 m/min in a manner such that the cumulative amount of light was 1000 mJ/cm² to cure material (1) constituting the micro concave-convex structure. Then, the mold was peeled from the film to obtain micro concave-convex structural body (1).

The obtained micro concave-convex structural body (1) was formed with, at its surface, a micro concave-convex structure transferred from the micro concave-convex structure of the mold, which had an average distance w₁ of 100 nm between adjacent convex portions 13, an average height (vertical distance d₁) of 180 nm of the convex portions 13, and a nearly conical shape as shown in FIG. 2. The results of the water contact angle and the reflectance of the surface are shown in Table 1.

### [Fabrication of micro concave-convex structural body (2)]

### <Preparation of material (2) constituting micro concave-convex structure>

1.0 part of "Irgacure 184" and 0.5 part of "Darocur TPO" both from Japan Ciba-Geigy Corp. as an active energy ray polymerization initiator were mixed in 85 parts of ethoxylated pentaerythritol tetraacrylate ("NK Ester ATM-4E," from Shin Nakamura Chemical Industry Co., Ltd.), 8 parts of hexadecyl acrylate (NOF Corp.) and 7 parts of methyl acrylate. These were uniformly dissolved to prepare material (2) constituting the micro concave-convex structure.

The compressive elastic modulus of the cured product of the obtained material (2) constituting the micro concave-convex structure was measured. The result is shown in Table 1.

### <Fabrication of micro concave-convex structural body (2)>

Except that material (2) for constituting a micro concave-convex structure was used, micro concave-convex structural body (2) was fabricated with the same production method as micro concave-convex structural body (1).

The obtained micro concave-convex structural body (2) was formed with, at its surface, a micro concave-convex structure transferred from the micro concave-convex structure of the mold, which had an average distance w₁ of 100 nm between adjacent convex portions 13, an average height (vertical distance d₁) of 180 nm of the convex portions 13, and a nearly conical shape as shown in FIG. 2. The results of the water contact angle and the reflectance of the surface are shown in Table 1.

### [Fabrication of micro concave-convex structural body (3)]

### <Preparation of material (3) constituting micro concave-convex structure>

1.0 part of "Irgacure 184" and 0.5 parts of "Irgacure 819" both from Japan Ciba-Geigy Corp. as an active energy ray polymerization initiator were mixed in 20 parts of dipentaerythritol hexaacrylate ("NK Ester A-DPH," from Shin Nakamura Chemical Industry Co., Ltd.), 25 parts of pentaerythritol triacrylate ("New Frontier PET-3," from Daiichi Kogyo Seiyaku Co., Ltd.), 25 parts of polyethylene glycol diacrylate ("NK Ester A-200," from Shin Nakamura Chemical Industry Co., Ltd.), 25 parts of ethoxylated dipentaerythritol hexaacrylate ("New frontier DPEA-12," from Daiichi Kogyo Seiyaku Co., Ltd.) and 5 parts of methyl acrylate, and the components were uniformly dissolved to prepare material (3) constituting a concave-convex structure.

The compressive elastic modulus of the cured product of the obtained material (3) constituting a micro concave-convex structure was measured. The result is shown in Table 1.

### <Fabrication of micro concave-convex structural body (3)>

Except that material (3) constituting a micro concave-convex structure was used and an acrylic film ("Acryplen HBS010," from Mitsubishi Rayon Co., Ltd.) of 38 µm thick was used as the substrate, micro concave-convex structural body (3) was fabricated with the same production method as micro concave-convex structural body (1).

The obtained micro concave-convex structural body (3) was formed with, at its surface, a micro concave-convex structure transferred from the micro concave-convex structure of the mold, which had an average distance w₁ of 100 nm between adjacent convex portions 13, an average height (vertical distance d₁) of 180 nm of the convex portions 13, and a nearly conical shape as shown in FIG. 2. The results of the water contact angle and the reflectance of the surface are shown in Table 1.

**Table 1**

| | Water contact angle (°) | Reflectance (%) | Compressive elastic modulus of cured product of material constituting micro concave-convex structure (MPa) |
|---|---|---|---|
| Micro concave-convex structural body (1) | 134.6 | 0.60 | 160 |
| Micro concave-convex structural body (2) | 141.3 | 0.60 | 287 |
| Micro concave-convex structural body (3) | 13 | 0.14 | 155 |

### [Synthesis Example 1]

### <Synthesis of urethane acrylate compound (UA1)>

In a flash made of glass, 117.6 g (0.7 mole) of hexamethylene diisocyanate as an isocyanate compound, 151.2 g (0.3 mole) of isocyanurate-type hexamethylene diisocyanate trimer, 128.7 g (0.99 mole) of 2-hydroxypropyl acrylate as a (meth)acryloyl compound having a hydroxyl group, 459 g (1.54 mole) of pentaerythritol triacrylate, 100 mass ppm of di-n-butyl tin dilaurate) as a catalyst, and 0.55 g of hydroquinone monomethyl ether as a polymerization inhibitor were added, and the mixture was reacted under the condition of 70°C to 80°C until the concentration of the remaining isocyanate was 0.1 mass% or less to obtain urethane acrylate compound (UA1). The average molecular weight of the obtained urethane acrylate compound (UA1) was 696.

### [Example 1]

A PET film ("A4300" from Toyobo Co., Ltd.; 38 µm thick) to which an adhesion-improving layer was attached was used as a protective film substrate. The flexural elastic modulus of the PET film to which an adhesion-improving layer was attached was measured to be 3100 MPawith the test method described in JIS K 7171: 2008 (ISO 178: 2001).

A photo-polymerizable curable resin composition was prepared from the components shown in Table 2. The viscosity of the obtained curable resin composition and the compressive elastic modulus of the cured product thereof were measured. The result is shown in Table 2.

The obtained curable resin composition was added dropwise to the surface of micro concave-convex structural body (1), covered by a PET film to which an adhesion-improving layer was attached, and then pressed to spread with a roller in a manner such that the thickness was made uniform, so as to bond micro concave-convex structural body (1) and the protective film substrate via the curable resin composition. The pressure of the pressing was 0.15 MPa.

The resultant was irradiated with an active energy ray from the side of the protective film substrate to cure the curable resin composition by using a fusion UV lamp (D lamp) (made by Fusion UV Systems Japan KK) in a manner such that the cumulative amount of light was about 1000 mJ/cm², so as to obtain a laminate (micro concave-convex structural body onto which a protective film was attached) in which the surface of micro concave-convex structural body (1) was protected by the protective film formed by the protective film resin layer (about 3 to 5 µm thick) and the protective film substrate.

Evaluations for the adhesion, windability, peeling and adhesive residue were performed on the obtained laminate. The result is shown in Table 2.

### [Examples 2 to 8 and Comparative Examples 1 to 8]

Except that the curable resin compositions were prepared from the components shown in Tables 2-3 and the obtained curable resin compositions and micro concave-convex structural bodies of the types as shown in Tables 2-3 were used, each laminate (micro concave-convex structural body to which a protective film was attached) was fabricated as in Example 1, and then each measurement/evaluation was performed. The results are shown in Tables 2-3.

**Table 2**

| | | | Example 1 | Example 2 | Example 3 | Example 4 | Example 5 | Example 6 | Example 7 | Example 8 |
|---|---|---|---|---|---|---|---|---|---|---|
| Type of micro concave-convex structural body | | | Structural body (1) | Structural body (1) | Structural body (1) | Structural body (2) | Structural body (2) | Structural body (2) | Structural body (2) | Structural body (2) |
| Composition of cured resin composition (mass part) | | UA1 | 50 | 0 | 0 | 50 | 0 | 0 | 0 | 0 |
| | | ATM-4E | 0 | 20 | 0 | 0 | 20 | 0 | 60 | 10 |
| | | PET-3 | 0 | 0 | 0 | 0 | 0 | 0 | 25 | 50 |
| | | EB8402 | 0 | 70 | 50 | 0 | 70 | 50 | 0 | 0 |
| | | C6DA | 50 | 0 | 20 | 50 | 0 | 20 | 15 | 40 |
| | | AP400 | 0 | 10 | 30 | 0 | 10 | 30 | 0 | 0 |
| | | IRG 184 | 1 | 1 | 1 | 1 | 1 | 1 | 1 | 1 |
| | | DAR TPO | 0.1 | 0.1 | 0.1 | 0.1 | 0.1 | 0.1 | 0.1 | 0.1 |
| Viscosity of cured resin composition (mPa·s) | | | 150 | 2217 | 323 | 150 | 2217 | 323 | 109 | 72 |
| Compressive elastic modulus of cured product of cured resin composition (MPa) | | | 130 | 75 | 45 | 130 | 75 | 45 | 250 | 255 |
| Difference in compressive elastic modulus (MPa) | | | -30 | -85 | -115 | -157 | -212 | -242 | -37 | -32 |
| Evaluation of adhesion | | | ○ | ○ | ○ | ○ | ○ | ○ | ○ | ○ |
| Evaluation of windability | | | ○ | ○ | ○ | ○ | ○ | ○ | ○ | ○ |
| Evaluation of peeling and adhesive residue | Peeling | | ○ | ○ | ○ | ○ | ○ | ○ | ○ | ○ |
| | Water contact angle (°) | After peeling | 134.6 | 138.8 | 136.9 | 138.2 | 139.8 | 140.4 | 141.3 | 141.3 |
| | | Difference from prior to protection | 0.0 | 4.2 | 2.3 | -3.1 | -1.5 | -0.9 | 0.0 | 0.0 |
| | Reflectance (%) | After peeling | 0.61 | 0.56 to 0.61 | 0.62 | 0.61 to 0.64 | 0.61 | 0.62 | 0.58 to 0.62 | 0.58 to 0.62 |
| | | Difference from prior to protection | 0.01 | -0.04 to 0.01 | 0.02 | 0.01 to 0.04 | 0.01 | 0.02 | -0.02 to 0.02 | -0.02 to 0.02 |
| | Evaluation | | ○ | ○ | ○ | ○ | ○ | ○ | ○ | ○ |

**Table 3**

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Type of micro concave-convex structural body | | | Structural body (1) | Structural body (1) | Structural body (1) | Structural body (1) | Structural body (2) | Structural body (2) | Structural body (2) | Structural body (3) |
| Composition of cured resin composition (mass part) | UA1 | | 0 | 0 | 80 | 0 | 0 | 0 | 0 | 50 |
| | ATM-4E | | 0 | 0 | 0 | 50 | 0 | 30 | 0 | 0 |
| | PET-3 | | 0 | 0 | 0 | 50 | 0 | 60 | 80 | 0 |
| | EB8402 | | 70 | 50 | 0 | 0 | 70 | 0 | 0 | 0 |
| | C6DA | | 0 | 50 | 20 | 0 | 0 | 10 | 20 | 50 |
| | AP400 | | 30 | 0 | 0 | 0 | 30 | 0 | 0 | 0 |
| | TRG 184 | | 1 | 1 | 1 | 1 | 1 | 1 | 1 | 1 |
| | DAR TPO | | 0.1 | 0.1 | 0.1 | 0.1 | 0.1 | 0.1 | 0.1 | 0.1 |
| Viscosity of cured resin composition (mPa·s) | | | 2301 | 130 | 2084 | 226 | 2301 | 164 | 135 | 150 |
| Compressive elastic modulus of cured product of cured resin composition (MPa) | | | 20 | 170 | 222 | 420 | 20 | 290 | 340 | 130 |
| Difference in compressive elastic modulus (MPa) | | | -140 | 10 | 62 | 260 | -267 | 3 | 53 | -25 |
| Evaluation of adhesion | | | ○ | ○ | ○ | × | ○ | ○ | ○ | ○ |
| Evaluation of windability | | | ○ | ○ | ○ | × | ○ | Δ | Δ | ○ |
| Evaluation of peeling and adhesive residue | Peeling | | × | × | × | × | × | × | × | × |
| | Water contact angle (°) | After peering | 59.3 | 82.8 | - | 60.4 | 63.2 | 61.8 | - | - |
| | | Difference from prior to protection | -75.3 | -51.8 | - | -74.2 | -78.1 | -79.5 | - | - |
| | Reflectance (%) | After peeling | 4.54 to 4.59 | 2.99 to 3.77 | - | 4.29 to 4.45 | 4.42 to 4.47 | 4.12 to 4.71 | - | - |
| | | Difference from prior to protection | 3.94 to 3.99 | 2.39 to 3.17 | - | 3.69 to 3.85 | 3.82 to 3.87 | 3.52 to 4.11 | - | - |
| | Evaluation | | × | × | × | × | × | × | × | × |

Moreover, the so-called "difference in compressive elastic modulus" in Tables 2-3 is a value obtained by subtracting the compressive elastic modulus of the cured product of the material constituting the micro concave-convex structure from the compressive elastic modulus of the cured product of the curable resin composition.

Moreover, the abbreviations in Tables 2-3 are explained below.
UA1: urethane acrylate compound (molecular weight: 696) synthesized in Synthesis Example 1 mentioned above.
ATM-4E: ethoxylated pentaerythritol tetraacrylate ("NK Ester ATM-4E" produced by Shin Nakamura Chemical Industry Co., Ltd.; molecular weight: 528).
PET-3: pentaerythritol triacrylate ("New frontier PET-3" produced by Daiichi Kogyo Seiyaku Co., Ltd.; molecular weight: 282).
EB8402: difunctional urethane acrylate ("Ebecryl 8402" produced by Daicel Cytec Co.; molecular weight: 1000).
C6DA: 1,6-hexanediol diacrylate (molecular weight: 226).
AP400: polypropylene glycol monoacrylate ("Blemmer AP-400" produced by NOF Corp.; molecular weight: 478).
IRG 184: 1-hydroxycyclohexyl phenyl ketone ("Irgacure 184" produced by Japan Ciba-Geigy Corp.).
DAR TPO: 2,4,6-trimethylbenzoyl diphenyl phosphine oxide ("Darocure TPO" produced by Japan Ciba-Geigy Corp.,).

It is clear from the results of Table 2 that in each laminate obtained in Examples 1 to 8, the protective film was adhered well to the micro concave-convex structural body.

Moreover, in the cases of Examples 1 to 8, after the protective film was peeled off, the difference in water contact angle or reflectance of the micro concave-convex structural body as compared to the body before protection was small, and good water repellency or anti-reflection properties were maintained. According to the results, the protective film can be peeled from the surface of the micro concave-convex structural body without a remaining portion of the protective film resin layer (adhesive residue).

Moreover, it is clear from the results of Table 3 that the laminates obtained in Comparative Examples 1 to 8 all have problems in the peelability or adhesive residue.

In the cases of Comparative Examples 1 and 5 where the compressive elastic modulus of the cured product of the curable resin composition is less than 30 MPa, while the protective film is being peeled off, cohesive failure is caused to the protective film resin layer, such that the protective film cannot be peeled off well. Moreover, the protective film resin layer remained to screen the micro concave-convex structural body, so the water contact angle and the reflectance were both changed significantly, and water repellency or anti-reflection properties were reduced.

In the cases of Comparative Examples 2-4, 6 and 7 where the compressive elastic modulus of the cured product of the curable resin composition was higher than the compressive elastic modulus of the cured product of the material constituting the micro concave-convex structure, the protective film cannot be peeled off well. Particularly in the cases of Comparative Example 3 and 7, the protective film substrates were torn, and were not in evaluation-worthy conditions. Moreover, in the cases of Comparative Examples 2, 4 and 6, a portion of the micro concave- convex structure was peeled off together with the protective film resin layer, and the water contact angle and the reflectance were both significantly changed, such that water repellency or anti-reflection property was reduced. Moreover, the compressive elastic modulus of the cured product of the curable resin composition of Comparative Example 4 was particularly high, and the adhesion of the protective film or the windability of the laminate was poor.

In Comparative Example 8 using micro concave-convex structural body (3) of which the surface had a water contact angle of 13°, the interaction between the micro concave-convex structural body (3) and the protective film resin layer was strong, and a large force was required to peel off the protective film, so the protective film cannot be peeled off well. Moreover, the polymerizable component having a molecular weight of 230 or less (the low molecular weight polymerizable components) were permeated into the micro concave-convex structural body, and therefore the micro concave-convex structural body is cloudy, thus damaging the appearance.

### [Comparative Example 9]

The curable resin composition used in Example 1 was smoothly coated, on a PET film to which an adhesion-improving layer as a protective film substrate was attached, by using a bar coater, and the curable resin composition was cured under a nitrogen environment to obtain a protective film that includes the protective film resin layer formed as the cured product of the curable resin composition on the surface of the protective film substrate.

The protective film was bonded to micro concave-convex structural body (1) in a manner such that the protective film resin layer of the obtained protective film was bonded to the surface of micro concave-convex structural body (1). However, the protective film resin layer was hard and could not follow the micro concave-convex structure to make a large contact area, so the protective film was not adhered to the micro concave-convex structural body, and a laminate was not obtained.

### Industrial Application

With the invention, good optical properties of the micro concave-convex structural body can be maintained, and damage to the micro concave-convex structure during transport and processing can be prevented. Moreover, even during long-term storage, the original optical properties or water repellency can still be exhibited without leaving an adhesive residue. Hence, the micro concave-convex structural body obtained by peeling the protective film from the laminate (micro concave-convex structural body to which the protective film is attached) in which the surface of the micro concave-convex structural body is protected with the method of the invention can be used in applications such as building materials (such as wall or rooftop), window materials (such as residential, automobile, electric vehicle, or boat vessel), and mirrors, and is very industrially useful. Moreover, the micro concave-convex structural body can also be used in applications such as a display requiring anti-reflection properties.

### Description of Reference Characters

- 1:: Laminate
- 10:: Micro concave-convex structural body
- 11:: Substrate
- 12:: Cured product (of material constituting the micro concave-convex structure)
- 13:: Convex portion
- 13a, 13b:: Top
- 14:: Concave portion
- 14a:: Bottom
- 15:: Middle layer
- 20:: Film (protective film)
- 21:: Film substrate (protective film substrate)
- 22:: Film resin layer [protective film resin layer (cured product of material constituting cured resin composition)]
- 30:: Aluminum plate
- 31, 35:: Micropore
- 32, 34:: Oxide film
- 33:: Pit
- 40:: Mold

## Claims

1. A method for producing a laminate including a micro concave-convex structural body and a film, wherein the micro concave-convex structural body has, at a surface thereof, a micro concave-convex structure having a period less than a wavelength of visible light, a water contact angle of the surface is 120° or greater, and the film contains a film substrate and a film resin layer to protect the surface of the micro concave-convex structural body, the method comprising:
a step of disposing a curable resin composition as the film resin layer between a side surface of the micro concave-convex structure of the micro concave-convex structural body and the film substrate;
a step of bonding the micro concave-convex structural body and the film substrate via the curable resin composition;
a step of curing the curable resin composition to obtain a cured product thereof, wherein a compressive elastic modulus of the cured product is 30 MPa or greater and is less than a compressive elastic modulus of a cured product of a material constituting the micro concave-convex structure.

2. The method of claim 1, wherein the curable resin composition is cured by irradiation with an active energy ray.

3. The method of claim 1, wherein a viscosity of the curable resin composition under 25°C is 10 mPa·s to 10000 mPa·s.

4. The method of claim 1, wherein the micro concave-convex structural body and the film substrate are bonded under a pressure of 0.01 MPa to 1 MPa.

5. The method of claim 1, wherein a cohesion force of the cured product of the curable resin composition is greater than an adhesion force between the cured product of the curable resin composition and the micro concave-convex structural body, and an adhesion force between the cured product of the curable resin composition and the film substrate is greater than the adhesion force between the cured product of the curable resin composition and the micro concave-convex structural body.

6. A laminate, including a micro concave-convex structural body and a film, wherein the micro concave-convex structural body has, at a surface thereof, a micro concave-convex structure having a period less than a wavelength of visible light, a water contact angle of the surface is 120° or greater, the film contains a film substrate and a film resin layer and protects the surface of the micro concave-convex structural body,
the film is laminated on the micro concave-convex structural body in a manner such that the micro concave-convex structure of the micro concave-convex structural body and the film resin layer are connected,
the film resin layer is formed by curing a curable resin composition, and
a compressive elastic modulus of the cured product of the curable resin composition is 30 MPa or greater and is less than a compressive elastic modulus of a cured product of a material constituting the micro concave-convex structure.

7. The laminate of claim 6, wherein the compressive elastic modulus of the cured product of the curable resin composition is 20 MPa to 250 MPa less than the compressive elastic modulus of the cured product of the material constituting the micro concave-convex structure.

8. The laminate of claim 6, wherein when a total amount of all polymerizable components contained in the curable resin composition is set to 100 mass%, the curable resin composition contains 5 mass% to 50 mass% of polymerizable components having a molecular weight of 230 or less.

9. The laminate of claim 6, wherein a thickness of the film substrate is 12 µm to 2 mm.

10. The laminate of claim 6, wherein a flexural elastic modulus of the film substrate is 500 MPa to 4000 MPa.

11. The laminate of claim 6, wherein the film substrate contains one or more resins selected from the group consisting of a polyolefin resin, a polycarbonate resin, a polyester resin, and an acrylic resin.

12. The laminate of claim 6, wherein the micro concave-convex structure includes a material containing one or more compounds selected from the group consisting of a fluorine-based compound, a silicone-based compound, a compound having an alicyclic structure, and a compound having a long-chain alkyl group.

13. An article, formed by peeling the film from the laminate of claim 6.

14. An article, formed by peeling the micro concave-convex structural body from the laminate of claim 6, and including the film substrate and the film resin.
